# EUROPEAN PATENT APPLICATION

(11) **EP 4 841 097 A1**
(43) Date of publication of application: **18.11.2026**
(21) Application number: 26175446.9
(22) Date of filing: 29.04.2026
(51) Int. Cl.: F02M 21/02, F02M 21/04, F02M 35/10

(54) **INJECTOR FOR AN ENGINE FOR INJECTING A FIRST GAS INTO A STREAM OF A SECOND GAS**

(30) Priority: 15.05.2025 DE 102025118845
(71) Applicant: Liebherr-Components Colmar SAS, 68025 Colmar Cedex (FR)
(72) Inventor: ÁLVAREZ, Iván, 68025 Colmar Cedex (FR)
(74) Representative: Lorenz Seidler Gossel Part. mbB

(57) **Abstract**

The present invention relates to an injector (1) for an engine for injecting a first gas into a stream of a second gas, in particular injector for injecting hydrogen in an intake manifold of a hydrogen gas engine, the injector comprising a pipe element (10) for injection of the first gas and being configured to be placed into a gas duct (3) for guiding the stream of the second gas, wherein the pipe element (10) has one or more openings (11) provided in a side wall (13) of the pipe element (10), wherein the pipe element (10) is configured such that the first gas is injected through the one or more openings (11) in the side wall (12) of the pipe element (10) into the stream of the second gas.

## Description

The present invention relates to an injector for an engine for injecting a first gas into a stream of a second gas, in particular to a hydrogen injector for a hydrogen gas engine.

Hydrogen port fuel injection is a method of injecting hydrogen gas as fuel into an internal combustion engine that involves injecting hydrogen into the intake ports of the engine, where it mixes with the incoming air before being drawn into the combustion chamber. Once the hydrogen is injected into the intake manifold, it mixes with the incoming air flowing to the intake valves. The air-fuel mixture then enters the combustion chamber during the intake stroke of the engine.

In hydrogen gas engines, hydrogen port fuel injection is currently foreseen through various systems, including gas admission valve injection systems, port fuel injector systems, and multipoint fuel delivery systems.

Due to its low ignition energy and wide flammability range, hydrogen can ignite prematurely, leading to knocking or even pre-ignition. Therefore, the hydrogen injection point is usually placed as close as possible to the intake valves of the engine to avoid pre-ignition and backfire.

However, dynamically mixing a gas type fuel in air close to homogeneity is a challenge as it requires a lot of convection flow and time. Because on a spark ignited port fueled injection internal combustion engine, only short mixing distances are available from the gas admission valve end pipe to the combustion chamber to avoid backfire, it is difficult to obtain sufficient gas mixing.

In prior art hydrogen engines, hydrogen is usually injected into the air duct leading to the intake valves through the open end of a pipe positioned at an angle within the intake manifold, with the open end facing the intake valve. The mixing of the injected hydrogen with the incoming air in the air stream of the intake manifold relies primarily on the turbulence created by the entry of the air stream through the valves.

Therefore, the prior art solutions do not provide a complete mixing between hydrogen and air, resulting in a less efficient combustion.

Similar problems may occur whenever a first gas is injected into a gas stream of a second gas and mixing of the two gas streams is required.

The object of the present invention therefore is to provide an injector providing better mixing of a first gas injected into a stream of a second gas, and in particular providing a hydrogen injector providing a better mixture between hydrogen and air leading to the intake valves of an hydrogen gas engine.

This object is solved by an injector according to claim 1. Preferred embodiments of the present invention form the subject matter of the dependent claims.

The present invention provides an injector for an engine for injecting a first gas into a stream of a second gas, the injector comprising a pipe element for injection of the first gas and being configured to be placed into a gas duct for guiding the stream of the second gas. The injector is characterized in that the pipe element has one or more openings provided in a side wall of the pipe element, wherein the pipe element is configured such that the first gas is injected through the one or more openings in the side wall of the pipe element into the stream of the second gas.

With this construction of the injector, the injection can be performed such that the turbulence created by the pipe element itself as an obstacle within the stream of the second gas, and in particular the airflow in the intake manifold, improves the mixture between the first gas ejected through the one or more openings and the second gas.

In particular, the injector may be a hydrogen injector for injecting hydrogen in an intake manifold of a hydrogen gas engine. As discussed above, in prior art solutions, the mixing of the injected hydrogen with the incoming air of the intake manifold relied primarily on the turbulence created by the entry of the air stream through the valves. Therefore, compared to prior art solutions, the present invention provides a solution in which the pipe element itself can be placed in the intake manifold such that it creates turbulence for mixing the injected hydrogen with the intake air, thereby improving the mixture homogenization between hydrogen and air and thereby the combustion efficiency of the engine.

The injector may however also be used in other engine applications, such as injecting of exhaust gases into the intake air in an EGR system and/or injecting of ammonia gas into the exhaust gas stream in an exhaust gas aftertreatment system.

In an embodiment of the present invention, the one or more openings of the pipe element are one or more slits that extend along the length of the pipe element. This provides for an improved injection.

In an embodiment of the present invention, the one or more slits of the pipe element have a width ranging from 3 mm to 6 mm and a length ranging from 10 mm to 30 mm and/or a ratio between a width and a length of between 1:10 and 1:2 and/or a ratio between a width of the slit and an outer diameter of the pipe element between 1:10 and 1:2. These sizes have shown to provide good injection properties especially for hydrogen injection.

In an embodiment of the present invention, a first and a second opening are provided on opposite sides of the pipe element with respect to a center line of the pipe element. Thereby, the pipe element can be placed in the gas stream such that the first gas is ejected through the first and the second opening transversely to the gas stream of the second gas, thereby using the turbulence created by the pipe element particularly efficiently.

In an embodiment of the present invention, wherein the pipe element is only provided with openings at two circumferential positions of the pipe element, in particular at two circumferential positions arranged opposite to each other. Thereby, the first gas is only injected at positions where the mixing is improved.

In an embodiment of the present invention, the distal end of the pipe element is closed. Therefore, the first gas is only injected through the opening or openings in the circumferential side wall of the pipe element.

In an embodiment of the present invention, there is a dead volume between the one or more openings of the pipe element and the distal end. Because the pipe element extends further from an axial end of the opening or openings into the gas stream, the turbulence created by the pipe element is improved. Further, the dead volume below the openings of the pipe element towards the distal end may help to linearize the pressure gradient along of the openings, ensuring that the hydrogen is injected more evenly across all the openings.

In an embodiment of the present invention, the injector comprises a connection element for connecting the injector to the gas duct, wherein a proximal end of the pipe element is attached to the connection element such that the pipe element extends into the gas duct when the connection element is connected to the gas duct.

In an embodiment of the present invention, the connection element has a flange section and an intermediate section, with the intermediate section configured to be placed in the opening of the gas duct.

The present invention further comprises an engine comprising a gas duct, in particular an intake manifold, and an injector as described above.

In an embodiment of the present invention, the injector is connected to the gas duct such that the pipe element is arranged transverse to the air flow stream inside the gas duct and/or transverse to the extension direction of the gas duct, and preferably at an angle of between 70° and 110° with respect to the air flow stream inside the gas duct and/or the extension direction of the gas duct, more preferably at an angle of between 80° and 100°. Thereby, the turbulence created by the pipe element is increased.

In an embodiment of the present invention, the injector is connected to the gas duct such that the one or more openings of the pipe element is or are arranged at a circumferential position of the pipe element that is transverse to the air flow stream inside the gas duct and/or transverse to the extension direction of the gas duct. Thereby, the turbulence created by the pipe element can efficiently mix the first gas with the gas stream of the second gas. In particular, when injecting the first gas transverse and in particular perpendicularly to the air flow stream of the second gas, a counter rotative vortex air flow phenomenon is produced, increasing the convection flow of the first gas into the gas flow stream leading to a better mixture.

In an embodiment of the present invention, the circumferential position has an angle of between 70° and 110° with respect to the air flow stream inside the gas duct and/or the extension direction of the gas duct, more preferably between 80° and 100°.

In an embodiment of the present invention, the axial center of the opening surface of the openings of the pipe element has a distance to the center of a cross section of the gas duct that is smaller than 20 % of a radius of the cross section, preferably smaller than 10 %. Thereby, the first gas is injected substantially at the center of the gas duct.

In an embodiment of the present invention, the injector comprises a connection element that is inserted into an insert hole of the gas duct, wherein the connection element comprises a flange section and an intermediate section, wherein the flange section rests on an outer surface of the gas duct and the intermediate section of the pipe is designed to fit into the insert hole of the gas duct, wherein preferably, the diameter of the intermediate section is larger than the diameter of the pipe element.

In an embodiment of the present invention, the injector is placed in the intake manifold upstream of the intake valves of the combustion chamber of the engine.

In an embodiment of the present invention, the injector is placed in the intake manifold directly in front of an interface of the intake manifold with an air intake duct of the cylinder head casing.

In an embodiment of the present invention, the pipe element has a cylindrical shape, in particular a cylindrical shape with a circular cross section. The cylindrical shape helps to create the turbulence created by the pipe element itself as an obstacle within the airflow.

In an embodiment of the present invention, the flange section has a flat top surface that is in contact with an injection system element. A flat top ensures a uniform contact surface.

In an embodiment of the present invention, the intermediate section of the pipe is designed to fit the insert hole on the intake port side of the intake manifold on width and length. A uniform fit between the intermediate section of the pipe and the insert hole on the intake port reduces the risk of misalignment that can affect the performance of the hydrogen injection system.

The present invention will now be described using drawings and embodiments.

### The drawings show:

- Fig. 1: an isometric view of a first embodiment of an injector for a hydrogen gas engine being placed in an insert hole of an intake manifold,
- Fig. 2: an isometric view of a second embodiment of an inventive injector for hydrogen injection into an intake manifold of a hydrogen gas engine,
- Fig. 3: a cross-sectional view of the second embodiment of an inventive injector for hydrogen injection into an intake manifold of a hydrogen gas engine,
- Fig. 4: a top view of the second embodiment of an inventive injector for hydrogen injection into an intake manifold of a hydrogen gas engine, and
- Fig. 5: an isometric view of the second embodiment of an injector for a hydrogen gas engine being placed in an insert hole of an intake manifold.

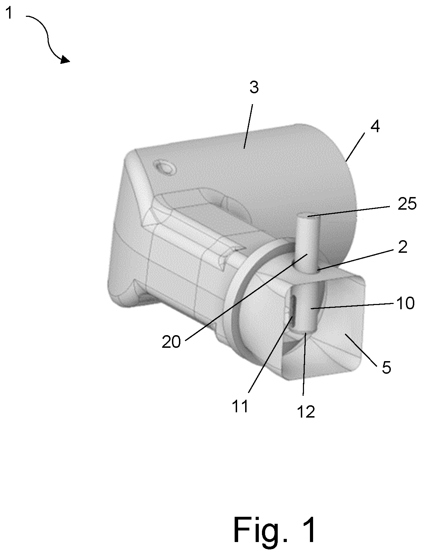

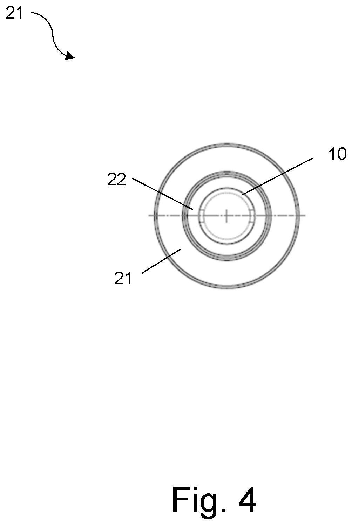

Fig. 1 to 6 show embodiments of inventive injectors which are used for hydrogen injection. However, the same injectors could also be used for other applications, and all the features described below for the embodiments may also be used in injectors used for other purposes.

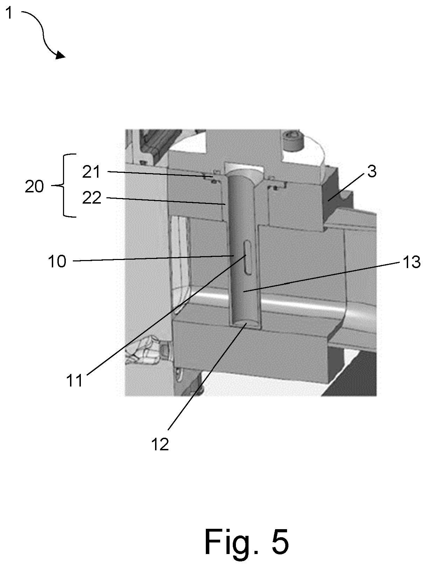

As illustrated in Fig. 1 and Fig. 5, the injector (1) according to the present invention is configured to be placed in an insert hole (2) of a gas duct, such as an intake manifold (3), such that the pipe element (10) reaches into or is placed in the gas duct.

The pipe element (10) comprises one or more openings (11), which are provided in a side wall (13) of the pipe element (10) and are thus located within the air flow of the gas duct (3). The first gas, in particular Hydrogen, is injected through the injector port (25) into the pipe element (10) and flows out through the one or more openings (11) in the side wall (13) of the pipe element (10) for injecting it into the gas stream inside the gas duct, in particular into the intake manifold (3).

The turbulence that the pipe element (10) itself creates as an obstacle within the airflow in the gas duct (3) is exploited to improve the homogenization between the injected first gas, such as hydrogen, and the stream of a second gas, such as air, passing through the gas duct (3). This improves the mixture between the first and the second gas, in particular the hydrogen-air mixture, which in turn improves the combustion efficiency of the engine.

The injector (1) is attached to the intake manifold (3) such that the pipe element (10) is arranged transverse to the air flow stream within the intake manifold (3). The pipe element (10) extends into the air duct leading to the valves at a right angle with respect to the air flow within the intake manifold (3), such that the pipe element (10) becomes an obstacle to the air flow within the intake manifold (3) that has to pass around the pipe element (10) on both sides.

Further, the openings (11) of the pipe element (10) are provided at circumferential positions on the pipe element (10) transverse to the direction of the air flow, i.e. the openings are arranged at the sides of the pipe element (10) facing the side walls of the intake manifold. Thereby, the vortex created by the air flowing past the pipe element is used for mixing the hydrogen with the air flow.

The injector (1) is placed in the intake manifold (3) directly in front of the intake valves of the combustion chamber of the engine, and downstream from an intake manifold elbow. In the embodiment, the injector is placed in a connection duct (5) between an intake manifold elbow element and the cylinder head casing, with the connection duct (5) forming an interface to the engine model.

In the embodiment, there are two openings (11) arranged on opposite sides of the pipe element (10).

The openings (11) are continuous slits that extend along the axial direction of the pipe element (10), wherein the slits have a width ranging from 3mm to 6mm and a length ranging from 10mm to 30 mm.

Instead of continuous slits, the openings could also be configured as a line of smaller openings arranged next to each other in the axial direction, thereby forming a noncontinuous slit.

Research has however shown that if instead of continuous slit openings (11), hole openings were used, the homogenization between the injected hydrogen and the air flow would not be as optimal, as the flow of the injected hydrogen generated by holes differs from that created by slits, and thus mixing in a different manner with the air flow within the intake manifold (3).

In the case that the two openings (11) of the pipe element (10) are arranged on opposite sides of the pipe element (10), relative to a center line of the pipe (1), the injected hydrogen is evenly distributed into the air stream within the intake manifold (3). This design ensures a consistent and uniform hydrogen-air mixture on both sides of the openings (11) within the intake manifold (3).

The distal end (12) of the pipe element (10) of the pipe (1) is closed, ensuring that all the hydrogen that is injected into the intake manifold (3) is released exclusively through the openings (11) arranged in the side walls of the pipe element (10).

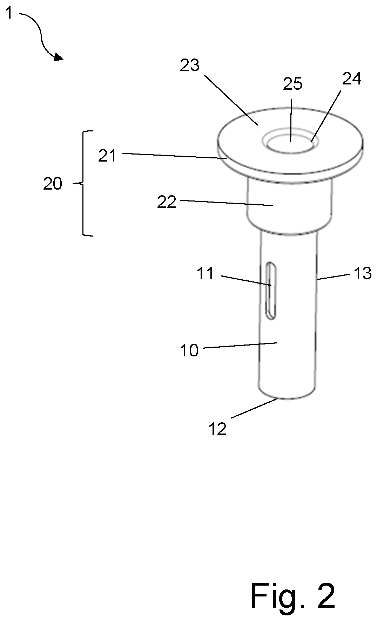

As illustrated in Fig. 2, a dead volume exists below the openings (11) of the pipe element (10) towards the distal end (12). In other words, the openings (11) of the pipe element (10) are not positioned directly at the end of the pipe element (10) but are instead placed at a distance from the distal end (12) and the openings (11) arranged in the pipe element (10), which linearizes the pressure gradient along of the openings (11). Preferably, the distance between the distal end (12) and the openings (11) is at least 50% of the axial length of the openings (11) and/or at least 50 % of an inner diameter of the pipe element (10).

Although the present invention is described as having a dead volume below the openings (11) of the pipe element (10) towards the distal end (13), it is not limited to this configuration. For instance, in an alternative embodiment the openings (11) of the pipe element (10) might be located specifically to start at the distal end (12) of the pipe element (10).

The pipe element (10) has a cylindrical shape, in particular a cylindrical shape with a circular cross section. This design enhances the homogenization of the hydrogen inside the pipe element (10) thereby ensuring a better control of the injected hydrogen into the air flow in the intake manifold (3). Moreover, the turbulence created by the pipe element (10) itself as a cylindrical obstacle within the airflow in the intake manifold (3) is more homogeneous, thereby improving the mixture homogenization between hydrogen and air in the intake manifold.

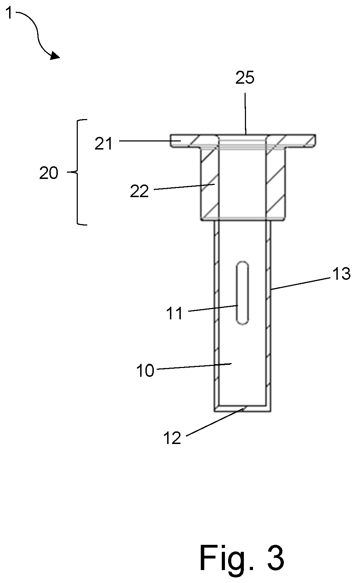

The injector (1) comprises a connection element (20) for connecting the pipe element (10) to the intake manifold (3). As illustrated in Fig. 2 and Fig. 3, the connection element (20) comprises a flange section (21) and an intermediate section (22). The injector (1) is inserted in the insert hole (2) of the intake manifold (3) such that the intermediate section (22) fits the width and length of the insert hole (2) on the intake manifold (3). The flange section (21) abuts with a sealing surface arranged on an outer surface of the intake manifold.

The flange section (21) has a flat top surface 23 that is in contact with an injection system element of the hydrogen injection system. The flange section (21) presses down a sealing element on its bottom surface to the intake manifold port. The flat top upper surface of the flange section (21) is in contact with an injection system element and can function as a metal-to-metal sealing surface or press on a sealing element.

The flange section (21) of the pipe (1) has an injector port (25), through which the hydrogen is injected into the pipe element (10).

Fig. 3 illustrates a cross-sectional view of the injector (1) for hydrogen injection into an intake manifold (3).

The flange section (21) has a larger diameter than both the intermediate section (22) and the pipe element (10), whereas the intermediate section (22) has a larger diameter than that of the pipe element (10). Additionally, the intermediate section (22) is specifically designed to fit the width and length of the insert hole (2) on the intake port side of the intake manifold (3).

The inner diameter of the injector port opening (25) is equal to the inner diameter of the pipe element (10).

As illustrated in Fig. 5, the injector is arranged inside the intake manifold such that the center of the openings (11) of the pipe element (10) are placed at the center height of the intake manifold (3). Positioning the center of the openings (11) of the pipe element (10) at the center height of the intake manifold (3) results in a more uniform mixture homogenization between the injected hydrogen and the air flow, improving the hydrogen-air mixture. In the embodiment, the distal end of the pipe element abuts with the opposite inner side wall of the intake manifold (3). In an alternative embodiment, the distal end of the pipe element is arranged at a distance to the opposite inner side wall of the intake manifold (3)

While the injector has been described with respect to a hydrogen injector, it can equally be used for mixing a first gas into a second gas in other engine applications, such as for mixing exhaust gas into the intake air stream in an exhaust gas recirculation system or in an exhaust gas aftertreatment system for mixing gaseous ammonia with the exhaust gas stream.

### Reference Signs List

- 1: injector
- 2: insert hole
- 3: intake manifold
- 4: air inlet
- 5: connection part / interface to engine model
- 10: pipe element
- 11: openings
- 12: distal end
- 13: walls
- 20: connection element
- 21: flange section
- 22: intermediate section
- 23: inner diameter
- 24: outer diameter
- 25: injector port

## Claims

1. Injector (1) for an engine for injecting a first gas into a stream of a second gas, in particular injector for injecting hydrogen in an intake manifold of a hydrogen gas engine, the injector comprising a pipe element (10) for injection of the first gas and being configured to be placed into a gas duct (3) for guiding the stream of the second gas,
**characterized in that**
the pipe element (10) has one or more openings (11) provided in a side wall (13) of the pipe element (10), wherein the pipe element (10) is configured such that the first gas is injected through the one or more openings (11) in the side wall (12) of the pipe element (10) into the stream of the second gas.

2. The injector (1) of claim 1, wherein the one or more openings (11) of the pipe element (10) are one or more slits that extend along the length of the pipe element (10).

3. The injector (1) according to claim 2, wherein the one or more slits (11) of the pipe element (10) have a width ranging from 3 mm to 6 mm and a length ranging from 10 mm to 30 mm and/or a ratio between a width and a length of between 1:10 and 1:2 and/or a ratio between a width of the slit and an outer diameter of the pipe element between 1:10 and 1:2.

4. The injector (1) according to any one of the preceding claims, wherein a first and a second opening (11) are provided on opposite sides of the pipe element (10) with respect to a center line of the pipe element (10).

5. The injector (1) according to any one of the preceding claims, wherein the pipe element (10) is only provided with openings (11) at two circumferential positions of the pipe element.

6. The injector (1) according to any one of the preceding claims, wherein the distal end (12) of the pipe element (10) is closed.

7. The injector (1) according to claim 6, wherein there is a dead volume between the one or more openings (11) of the pipe element (10) and the distal end (12).

8. The injector (1) according to any one of the preceding claims, comprising a connection element (20) for connecting the injector (1) to the gas duct (3), wherein a proximal end of the pipe element (10) is attached to the connection element (20) such that the pipe element extends into the gas duct (3) when the connection element is connected to the gas duct (3).

9. An engine comprising a gas duct (3), in particular an intake manifold (3), and an injector (1) according to any one of claims 1 to 8.

10. The engine according to claim 9, wherein the injector (1) is connected to the gas duct (3) such that the pipe element (10) is arranged transverse to the air flow stream inside the gas duct and/or transverse to the extension direction of the gas duct(3), and preferably at an angle of between 70° and 110° with respect to the air flow stream inside the gas duct and/or the extension direction of the gas duct, more preferably at an angle of between 80° and 100°.

11. The engine according to claim 9 or 10, wherein the injector (1) is connected to the gas duct (3) such that the one or more openings (11) of the pipe element (10) is or are arranged at a circumferential position of the pipe element (10) that is transverse to the air flow stream inside the gas duct (3) and/or the extension direction of the gas duct, wherein the circumferential position preferably has an angle of between 70° and 110° with respect to the air flow stream inside the gas duct and/or the extension direction of the gas duct, more preferably between 80° and 100°.

12. The engine according to any one of claims 9 to 11, wherein the axial center of the opening surface of the openings (11) of the pipe element (10) has a distance to the center of a cross section of the gas duct (3) that is smaller than 20 % of a radius of the cross section, preferably smaller than 10 %.

13. The engine according to any one of claims 8 to 12, wherein the injector comprises a connection element (20) that is inserted into an insert hole (2) of the gas duct (3), wherein the connection element (20) comprises a flange section (21) and an intermediate section (22), wherein the flange section (21) rests on an outer surface of the gas duct and the intermediate section (22) of the pipe (1) is designed to fit into the insert hole (2) of the gas duct, wherein preferably, the diameter of the intermediate section (22) is larger than the diameter of the pipe element (10) .

14. The engine according to any one of claims 8 to 13, wherein the injector (1) is placed in the intake manifold (3) upstream of the intake valves of the combustion chamber of the engine.

15. The engine according to any one of claims 8 to 14, wherein the injector (1) is placed in the intake manifold (3) directly in front of an interface of the intake manifold with an air intake duct of the cylinder head casing.
